# EUROPÄISCHE PATENTSCHRIFT

(11) **EP 0 705 731 B1**
(45) Veröffentlichungstag und Bekanntmachung des Hinweises auf die Patenterteilung: **29.12.1999**
(21) Anmeldenummer: 95114499.7
(22) Anmeldetag: 15.09.1995
(51) Int. Cl.: B60Q 1/56, F21V 19/00, B60Q 1/26

(54) **Fahrzeugleuchte, insbesondere Kennzeichenleuchte**
Vehicle light, particularly for number plate
Feu de véhicule en particulier pour plaque d'immatriculation

(30) Priorität: 06.10.1994 DE 4435725
(43) Veröffentlichungstag der Anmeldung: 10.04.1996
(73) Patentinhaber: Hella KG Hueck & Co., 59552 Lippstadt (DE)
(72) Erfinder: Hahn, Kurt, D-59558 Lippstadt (DE); Steinmann, Hubert, D-33100 Paderborn (DE)

(56) Entgegenhaltungen:
- DE-A- 4 113 666
- US-A- 3 832 540

## Beschreibung

Die Erfindung betrifft eine Fahrzeugleuchte, insbesondere Kennzeichenleuchte, mit einem Abdeckelement, durch welches eine Öffnung eines Gehäuses abschließbar ist und welches ein lichtdurchlässiges Lichtfenster aufweist, mit zwei an der Innenseite des Abdeckelementes angebrachten Halteelementen, an welchen eine Soffittenlampe mit ihren beiden Sockeln halterbar ist und mit zwei elektrischen Kontaktelementen, durch welche zur Soffittenlampe hin eine elektrische Steckverbindung herstellbar ist.

Das deutsche Gebrauchsmuster 76 26 235 beschreibt eine Fahrzeugleuchte, insbesondere Kennzeichenleuchte, bei der das lichtdurchlässige Abdeckelement aus Kunststoff hergestellt ist und die Halteelemente aus Federblech hergestellt sind und zusätzlich als elektrische Kontaktelement dienen. Die Kontaktelemente sind mit einem gedoppelten mittleren Abschnitt in Vertiefungen in der Innenseite des Abdeckelementes eingeschoben und mit dem Abdeckelement selbstrastend verbunden. Ein freier Endabschnitt der Kontaktelemente ist als Flachsteckanschluß ausgeführt, während der andere freie Endabschnitt U-förmig ausgeführt ist und in seinem federnden freien Schenkel eine Öffnung zur Halterung der Soffittenlampe aufweist. Beim Einsetzen der Soffittenlampe zwischen die beiden Kontaktelemente gleiten die Sockel mit den beiden Spitzen ihrer sich abgewandten kegelförmigen Abschnitte an den federnden Schenkeln entlang bis die kegelförmigen Abschnitte selbstrastend in die Öffnung der Kontaktelemente eingreifen. Die Soffittenlampe ist spielfrei in den Öffnungen der Kontaktelemente gehalten, da die Kontaktelemente mit den federnden freien Schenkeln unter Vorspannung an der Mantelfläche der kegelförmigen Abschnitte der Sockel anliegen. Durch das Abdeckelement ist eine Öffnung eines Fahrzeugteils abschließbar. Das Fahrzeugteil kann ein lösbar oder unlösbar mit der Karosserie verbundenes Gehäuse sein. Ein Wechsel der Soffittenlampe ist nach dem Abnehmen des Abdeckelements von dem Fahrzeugteil leicht und einfach, da dann die Soffittenlampe dann von Hand gut zugänglich ist. Eine elektrische Steckverbindung ist zwischen dem die Soffittenlampe tragenden Kontaktelement und einem eine Flachsteckhülse aufweisenden Kontaktelement herstellbar. Eine Fahrzeugleuchte mit einer solchen Steckverbindung ist aus der gattungsbildenden DE-A-29 02 921 bekannt. Hierbei dient als Fahrzeugteil ein topfförmiges Gehäuse, welches zur Aufnahme der Soffittenlampe, der die Soffittenlampe tragenden Kontaktelemente und der die Flachsteckhülse aufweisenden Kontaktelemente dient. Die Flachsteckhülsen sind an das freie Ende eines flexiblen Zuleitungskabels befestigt. Die elektrische Steckverbindung muß in einem zusätzlichen Arbeitsgang vor dem Aufsitzen des Abdeckelementes auf das Fahrzeugteil hergestellt werden. Außerdem muß das Abdeckelement solange von Hand an dem Fahrzeugteil festgehalten werden, bis das Abdeckelement an dem Fahrzeugteil befestigt ist. Als Befestigungsmittel dienen in den Randbereich des Abdeckelements eingebrachte Löcher für Befestigungsschrauben. Das Befestigen des Abdeckelementes an dem Fahrzeugteil ist besonders dann sehr umständlich und zeitaufwendig, wenn die Fahrzeugleuchte von unten her in eine Öffnung des Fahrzeugteils eingesetzt werden muß. Kennzeichenleuchten und Innenleuchten eines Fahrzeuges müssen oftmals von unten her in eine Öffnung des Fahrzeugteils eingesetzt werden. Ferner kann sich bei einem Wechsel der Soffittenlampe die elektrische Steckverbindung soweit lösen, daß nach dem Aufsetzen des Abdeckelements auf das Fahrzeugteil der elektrische Kontakt nicht mehr sicher ist. Bei Innenleuchten sind auf ihrer Vorderseite die die Soffittenlampe tragenden Kontaktelemente als dunkle Flecken zu sehen, da die Kontaktelemente an der Innenseite des Abdeckelements befestigt sind. Die Flachsteckhülsen können erst an die elektrischen Zuleitungskabel angebracht werden, wenn die Zuleitungskabel durch eine Öffnung des Bodens des topfförmigen Fahrzeugteils hindurchgeführt sind. Beim klemmenden oder selbstrastenden Einsetzen der zur Halterung der Soffittenlampe dienenden Kontaktelemente in die Vertiefungen des Abdeckelements können so große Kräfte auf das Abdeckelement wirken, daß Spannungsrisse in dem Abdeckelement entstehen.

Aufgabe der Erfindung ist es, die im Oberbegriff des Anspruchs 1 beschriebene Fahrzeugleuchte, insbesondere Kennzeichenleuchte derart zu gestalten, daß ein Wechsel der Soffittenlampe auch dann an dem Abdeckelement durchführbar ist, wenn an dem Abdeckelement weder ein separates Halteelement noch ein Kontaktelement für die Soffittenlampe angebracht sein muß und durch die elektrische Steckverbindung nach einem Aufsetzen dese Abdeckelements auf ein Fahrzeugteil sowohl die elektrische Steckverbindung selbsttätig hergestellt ist als auch das Abdeckelement selbsttätig gehalten ist. Diese Aufgabe wird nach der Erfindung dadurch gelöst, daß die beiden Halteelemente an die Innenseite des Abdeckelementes einstückig angeformt sind und daß die elektrische Steckverbindung unmittelbar zwischen den beiden Kontaktelementen, welche an dem Gehäuse befestigbar sind, und den beiden Sockeln der Soffittenlampe herstellbar ist und daß die elektrischen Kontaktelemente und die Sockel der Soffittenlampe zur lösbaren Halterung des Abdeckelementes mit der zwischen seinen Halteelementen einsetzbaren Soffittenlampe dienen. Da die mit den Sockeln der Soffittenlampe eine Steckverbindung herstellenden Kontaktelemente sowohl zur elektrischen Stromzuführung als auch zur Halterung der Soffittenlampe und des Abdeckelements dienen, können diese lösbar oder unlösbar an einem Fahrzeugteil festgesetzt werden. Beim Abnehmen des Abdeckelements von dem Fahrzeugteil löst sich die Steckverbindung zwischen den Sockeln der Soffittenlampe und den Kontaktelementen und die Soffittenlampe kann leicht und einfach an dem Abdeckelement gewechselt werden. Nach dem Aufsetzen des Abdeckelements auf das Fahrzeugteil sind die beiden Sockel der Soffittenlampe und die Kontaktelemente selbsttätig ineinandergesteckt und somit sind durch die Steckverbindung sowohl die Soffittenlampe als auch das Abdeckelement über die Soffittenlampe und seine Halteelemente an dem Fahrzeugteil gehaltert. Das Fahrzeugteil kann ein topfförmiges Gehäuse sein, welches lösbar oder unlösbar mit der Fahrzeugkarosserie verbunden ist.

Die beiden Kontaktelemente sind kostengünstig herstellbar, wenn sie aus Federblech bestehen und zwei gabelförmige Abschnitte mit federnden Schenkeln aufweisen, zwischen welchen die Soffittenlampe mit ihren beiden Sockeln einsteckbar ist. Die Soffittenlampe ist an ihren Sockeln besonders fest zwischen den gabelförmigen Abschnitten gehalten, wenn die federnden Schenkel der gabelförmigen Abschnitte die Sockel an ihren zylinderförmigen Abschnitten umfassen. Die Soffittenlampe ist mit ihren beiden Sockeln leicht und einfach zwischen die federnden Schenkel der gabelförmigen Abschnitte einfädelbar, wenn die freien Endabschnitte der federnden Schenkel nach außen gebogen sind. Beim Einführen der Sockel zwischen die federnden Schenkel gleiten die Sockel mit ihrem zylindrischen Abschnitt an den nach außen gebogenen Endabschnitt der federnden Schenkel entlang, bis sie von den federnden Schenkeln selbstrastend umfaßt sind.

Weiterhin ist es vorteilhaft, wenn die Kontaktelemente durch Biegen um eine Linie gedoppelt sind, wobei sich benachbarte Endabschnitte der Doppelung auseinandergebogen sind und die Schenkel des gabelförmigen Abschnitts sind. Dadurch können die Kontaktelemente bis auf ihre federnden Schenkel eine ausreichend große Biegesteifigkeit aufweisen.

Bei einer Fahrzeugleuchte, mit einem Gehäuse, welches zur Aufnahme der Soffittenlampe und der Kontaktelemente dient und welches durch das Abdeckelement abschließbar ist, ist es weiterhin vorteilhaft, wenn das Gehäuse mit Befestigungsmitteln versehen ist, durch welche die Kontaktelemente an dem Gehäuse festsetzbar sind. Hierbei ist es zweckmäßig, wenn die Befestigungsmittel von in dem Boden des Gehäuses eingebrachten Schlitzen gebildet sind, in welchen die Kontaktelemente mit einem vom gabelförmigen Abschnitt weg weisenden Endabschnitt festsitzend einschiebbar sind bis ein seitlicher Vorsprung der Kontaktelemente an die Innenseite des Gehäuses anschlägt. Der Festsitz der Kontaktelemente in dem Schlitz des Gehäuses kann selbstklemmend und/oder selbstrastend sein. Die Kontaktelemente sind durch ihren seitlichen Vorsprung mit ihrem gabelförmigen Abschnitt immer genau fixiert und somit ist eine ausreichend feste Halterung und eine genaue Lage der Soffittenlampe sicher.

Bei einer besonders vorteilhaften Weiterbildung der Erfindung weist das Gehäuse an sich gegenüberliegenden Seitenwänden ein in das Innere des Gehäuses vorspringendes Abstützelement für die Halteelemente auf. Dadurch können beim Abnehmen des Abdeckelements vom Gehäuse die Halteelemente nicht nach außen auffedern und somit verbleibt die Soffittenlampe auch bei einem sehr großen Festsitz an den Kontaktelementen nicht im Inneren des Gehäuses, sondern ist an den Halteelementen des abgenommenen Abdeckelements gehaltert. Hierbei ist es zweckmäßig, wenn die Halteelemente an die Innenseite des Abdeckelements angeformte Wände sind, welche mit ihren sich abgewandten Außenseiten an ein Abstützelement angrenzen.

Zudem ist es vorteilhaft, wenn das Abdeckelement auf seiner Innenseite an seinem äußeren Randbereich umlaufend eine Ringnut zur Aufnahme einer Dichtung aufweist. Dadurch kann nach dem Aufsetzen des Abdeckteils auf das Gehäuse die Dichtung soweit zusammengedrückt werden, daß das Abdeckteil mit seiner Innenseite unmittelbar an einem Fahrzeugteil anliegt. Dadurch ist eine genaue Lage des Abdeckteils bzw. seinen Optikelementen zu dem gabelförmigen Abschnitt der Kontaktelemente und somit der von den gabelförmigen Abschnitten getragenen Soffittenlampe gegeben.

Bei einer Fahrzeugleuchte mit Befestigungselementen zum Festsetzen des Abdeckelements an einem Gehäuse ist es weiterhin vorteilhaft, wenn die Soffittenlampe mit großem Spiel an den Halteelementen und spielfrei an den Kontaktelementen halterbar ist. Dadurch bestehen zwischen der Soffittenlampe und dem Abdeckelement keine Spannungskräfte und somit können durch das Haltern der Soffittenlampe keine Spannungsrisse im Abdeckelement entstehen.

Bei einer Fahrzeugleuchte, bei welcher die Soffittenlampe mit ihren sich abgewandten kegelförmigen Sockelabschnitten in eine Öffnung der Halteelemente eingesetzt ist, ist es weiterhin vorteilhaft, wenn die Öffnung in den Halteelementen ein in Aufsetzrichtung des Abdeckelementes verlaufendes Langloch ist. Dadurch kann eine zwischen den Halteelementen des Abdeckelements und den gabelförmigen Abschnitten der Kontaktelemente bestehende große Toleranz in Aufsetzrichtung ausgeglichen werden. Bei einer solchen Ausgestaltung ist ein klapperfreier Festsitz des Abdeckelements gegeben, wenn eine zwischen dem Abdeckelement und dem Gehäuse eingesetzte Dichtung dieses große Spiel ausgleicht und/oder das Abdeckelement durch zusätzliche Befestigungsmittel, z. B. Schrauben, an dem Gehäuse festsetzbar ist.

Zur Befestigung des Abdeckelements an dem Gehäuse sind keine zusätzlichen Befestigungsmittel notwendig, wenn die Soffittenlampe durch die Halteelemente und sowohl die Soffittenlampe als auch mittelbar das Abdeckelement durch die Kontaktelemente spielfrei halterbar ist. Bei einer solchen Lösung ist das Abdeckelement besonders einfach und leicht zu demontieren und zu montieren.

Zwei Ausführungsbeispiele der Erfindung sind in der Zeichnung dargestellt, und zwar zeigen
- Figur 1: einen vertikalen mittleren Schnitt durch eine Kennzeichenleuchte mit ihren eine Steckverbindung zur Soffittenlampe hin herstellenden Kontaktelementen, welche in einem topfförmigen Gehäuse eines Fahrzeugteils festsitzend angeordnet sind;
- Figur 2: einen mittleren vertikalen Längsschnitt durch eine Fahrzeugleuchte, mit einem Kontaktelemente und die Soffittenlampe aufnehmenden topfförmigen Gehäuse und einem das topfförmige Gehäuse abschließenden Abdeckelement, welches mittels Halteelementen an der Soffittenlampe und mittels Befestigungselementen an dem Rand des Gehäuses befestigt ist und
- Figur 3: einen Schnitt nach der Linie A-A in Figur 2.

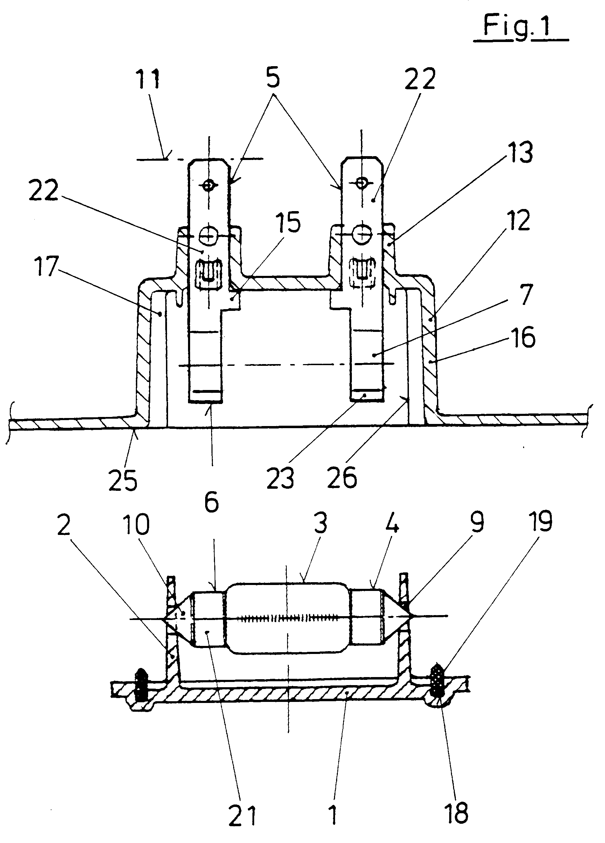

Die in Figur 1 dargestellte Kennzeichenleuchte weist ein aus Kunststoff hergestelltes rechteckförmiges Abdeckelement (1) auf. An die Innenseite des Abdeckelementes (1) sind zwei Halteelemente (2) für eine Soffittenlampe (3) einstückig angeformt. Die Halteelemente (2) sind parallel zueinander verlaufende Wände, welche sich zu ihrem freien Ende hin verjüngen und quer zu ihren breiten Seitenflächen federnd ausgeführt sind. In die freien Endabschnitte der Wände ist jeweils eine kreisrunde Öffnung (9) eingebracht. Die Soffittenlampe (3) ist zwischen die beiden Halteelemente (2) eingesetzt. Beim Einsetzen der Soffittenlampe (3) zwischen die Halteelemente (2) federn die beiden Halteelemente (2) nach außen und die Soffittenlampe (3) gleitet mit den Spitzen ihrer kegelförmigen Abschnitte (10) an den sich zugewandten Innenseiten der Halteelemente (2) entlang, bis die kegelförmigen Abschnitte (10) der Soffittenlampe (3) selbsttätig in die Öffnung (9) der Halteelemente (2) einrasten. Die Soffittenlampe (3) ist spielfrei zwischen den beiden Halteelementen (2) gehalten, da die Halteelemente (2) mit dem Rand ihrer Öffnungen (9) unter Vorspannung an der Mantelfläche der kegelförmigen Abschnitte (10) der Soffittenlampe (3) anliegen. Das optisch wirksame Lichtfenster des Abdeckelements (1) ist so groß wie möglich, da die Halteelemente (2) die Soffittenlampe (3) nicht an ihren zylindrischen Abschnitten (21) ihrer Sockel (4), sondern an den kegelförmigen Abschnitten (10) tragen. Das Abdeckelement (1) kann bis auf das Lichtfenster aus lichtundurchlässigem Kunststoff bestehen. Das lichtdurchlässige Abdeckelement (1) weist an seinem umlaufenden Randbereich eine in seine Innenseite eingebrachte Ringnut (18) auf, in welche eine nach außen abstehende Ringdichtung (19) eingesetzt ist. Die zylindrischen Abschnitte (21) des Sockels (4) der Soffittenlampe (3) und die Kontaktelemente (5) dienen als eine elektrische Steckverbindung (6). Die Kontaktelemente (5) sind aus einem streifenförmigen Federblech hergestellt, welches durch Biegen um eine quer zur seiner Längsausdehnung verlaufende Linie (11) gedoppelt ist. Der die Biegelinie (11) aufweisende Endabschnitt der Kontaktelemente (5) ist ein Flachsteckeranschluß (22). Dadurch können die gedoppelten Kontaktelemente (5) an dem Flachsteckeranschluß (22) nicht auseinanderfedern. Im mittleren Abschnitt weisen die Kontaktelemente (5) eine durch einen Schlitz freigeschnittene, nach außen gebogene federnde Zunge auf, welche mit ihrem freien Ende von dem Flachsteckeranschluß (22) weg weist. Der andere Endabschnitt der Kontaktelemente (5) ist ein gabelförmiger Abschnitt (7), dessen federnde Schenkel (8) an ihrem Scheitel aneinanderstoßen und zusammen einen zylinderförmigen Abschnitt bilden. Die freien Endabschnitte (23) der federnden Schenkel (8) sind nach außen gebogen und dient als Einfädelungshilfe für die zylindrischen Abschnitte (21) der Sockel (4) der Soffittenlampe (3). Beim Einführen der zylinderförmigen Abschnitte (21) der Sockel (4) der Soffittenlampe (3) zwischen die Schenkel (8) der Kontaktelemente (5) gleiten die zylinderförmigen Abschnitte (21) mit ihrer Mantelfläche an den Endabschnitten (23) der federnden Schenkel (8) entlang. Dabei federn die beiden Schenkel (8) der Kontaktelemente (5) auseinander bis die federnden Schenkel (8) die Sockel (4) selbsttätig umfassen. Danach liegen die federnden Schenkel (8) mit ihren zylinderförmigen Abschnitten flächig an den zylinderförmigen Abschnitten (21) der Sockel (4) an.

Die beiden Kontaktelemente (5) sind an einem topfförmigen Gehäuse (12) eines Fahrzeugteils festgesetzt. Das Gehäuse (12) ist einstückig mit einem aus Kunststoff bestehenden Fahrzeugteil hergestellt. Dieses Fahrzeugteil kann eine Griffleiste einer Kofferraumklappe eines Fahrzeuges sein. Das Gehäuse (12) weist Befestigungsmittel (13) für Kontaktelemente (5) auf. Die Befestigungsmittel (13) sind in dem Boden des topfförmigen Gehäuses (12) eingebrachte Schlitze. In die Schlitze sind die Kontaktelemente (5) mit ihrem Flachsteckeranschluß (22) voraus eingesteckt, bis die Kontaktelemente (5) mit einem seitlichen Vorsprung (15) an der Innenseite des Bodens des topfförmigen Gehäuses (12) anschlagen. In dieser Endstellung greifen die federnden Zungen der Kontaktelemente (5) selbsttätig in eine Hinterschneidung der Befestigungsmittel (13) des Gehäuses (12) ein.

Beim Aufsetzen des Abdeckelementes (1) und der von seinen Halteelementen (2) getragenen Soffittenlampe (3) auf das das topfförmige Gehäuse (12) aufweisende Fahrzeugteil, umfassen die gabelförmige Abschnitte (7) der Kontaktelemente (5) die Sockel (4) selbsttätig. Somit ist durch die Steckverbindung (6) die Soffittenlampe (3) und das spielfrei mit der Soffittenlampe (3) verbundene Abdeckelement (1) an dem Gehäuse (12) festgesetzt. Bei montiertem Abdeckelement (1) liegt dieses unter der Zwischenschaltung der Ringdichtung (19) dicht an dem Rand (25) des Gehäuses (12) an. Der genaue Abstand der Soffittenlampe (3) zu optischen Mitteln des lichtdurchlässigen Abdeckelementes (1) ist sehr genau, da die Soffittenlampe (3) spielfrei an dem Abdeckelement (1) gehaltert ist. Die Halteelemente (2) grenzen mit ihren sich abgewandten Außenseiten an Abstützelemente (17) des Gehäuses (12) an. Die Abstützelemente (17) ragen quer zur Aufsetzrichtung des Abdeckelementes (1) in das Innere des Gehäuses (12) hinein und weisen eine in Aufsetzrichtung des Abdeckelements (1) verlaufende Abstützfläche (26) auf. An jedem Halteelement (2) sind zwei Abstützelemente (7) angeordnet, zwischen welchen die Längsachse der Soffittenlampe (3) hindurch verläuft. Durch die Abstützelemente (17) können beim Abnehmen des Abdeckteils von dem Gehäuse (12) die federnden Halteelemente (2) nicht soweit auseinanderfedern, daß die Soffittenlampe (3) zwischen den gabelförmigen Abschnitten (7) der Kontaktelemente (5) festgehalten wird. Somit ist immer sichergestellt, daß nach einem Abnehmen des Abdeckelementes (1) von dem Gehäuse (12) die Soffittenlampe (3) von den Halteelementen (2) des Abdeckelementes (1) gehalten ist.

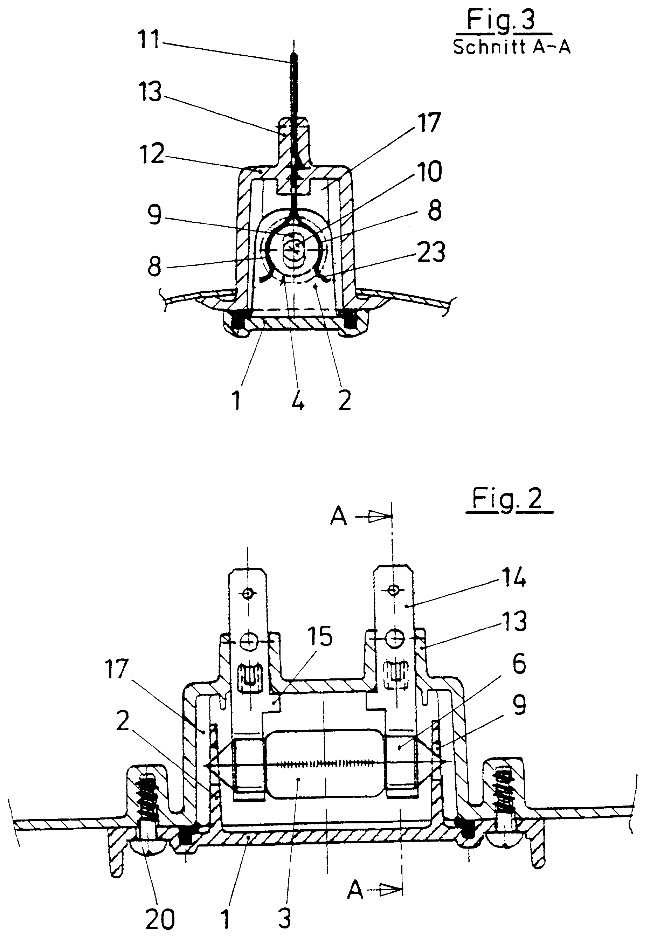

Bei der in Figur 2 und 3 dargestellten Kennzeichenleuchte ist die Soffittenlampe (3) mit den kegelförmigen Abschnitten (10) ihrer Sockel (4) mit großem Spiel in die Öffnung (9) der Halteelemente (2) eingesetzt. Die Öffnungen (9) sind in Aufsetzrichtung des Abdeckelementes (1) verlaufende Langlöcher. Nach dem Herstellen der Steckverbindung (6) zwischen den Sockeln (4) der Soffittenlampe (3) und den Kontaktelementen (5) ist die Soffittenlampe (3) an den Kontaktelementen (5) klapperfrei festgesetzt, während die Halteelemente (2) mit Spiel an den kegelförmigen Abschnitten (10) der Sockel (4) gehalten sind. Der endgültige Festsitz des Abdeckelements (1) an dem Gehäuse (12) erfolgt durch Befestigungselemente (20). Die Befestigungselemente (20) sind in das Abdeckelement (1) eingebrachte Öffnungen und durch diese Öffnungen hindurchgeführte Befestigungsschrauben (20), welche mit ihrem Gewindeschaft in eine Gewindebohrung des Gehäuses (12) eingreifen. Nach einem Festdrehen der Befestigungsschrauben (20) liegt das Abdeckelement (1) mit seinem umlaufenden Randbereich flächig an dem äußeren Rand (25) des Gehäuses (12) an. Hierbei ist die Ringdichtung (19) entsprechend stark zusammengedrückt. Obwohl die Soffittenlampe (3) mit Spiel in die Öffnung (9) der Halteelemente (2) eingreift, ist sie nach dem Aufsetzen des Abdeckelementes (1) auf das Gehäuse (12) genau zu Optikelementen des Abdeckelementes (1) fixiert, da die Innenseite des Bodens des Gehäuses (12) als Anlagefläche für die Kontaktelemente (5) dient und zusammen von der Werkzeughälfte geformt ist, welche den äußeren Rand (25) des Gehäuses (12) formt.

### Bezugszeichenliste

### Fahrzeugleuchte, insbesondere Kennzeichenleuchte

- 1: Abdeckelement
- 2: Halteelement
- 3: Soffittenlampe
- 4: Sockel
- 5: Kontaktelement
- 6: Steckverbindung
- 7: gabelförmiger Abschnitt
- 8: Schenkel
- 9: Öffnung
- 10: kegelförmiger Abschnitt
- 11: Linie
- 12: Gehäuse
- 13: Befestigungsmittel
- 14: Endabschnitt
- 15: Vorsprung
- 16: Seitenwand
- 17: Abstützelement
- 18: Ringnut
- 19: Dichtung
- 20: Befestigungselement
- 21: zylindrischer Abschnitt
- 22: Flachsteckeranschluß
- 23: Endabschnitt
- 24: Zunge
- 25: Rand
- 26: Abstützfläche

## Patentansprüche

1. Fahrzeugleuchte, insbesondere Kennzeichenleuchte, mit einem Abdeckelement (1), durch welches eine Öffnung eines Gehäuses (12) abschließbar ist und welches ein lichtdurchlässiges Lichtfenster aufweist, mit zwei an der Innenseite des Abdeckelementes (1) angebrachten Haltelementen (2), an welchen eine Soffittenlampe (3) mit ihren beiden Sockeln (4) halterbar ist und mit zwei elektrischen Kontaktelementen (5), durch welche zur Soffittenlampe (3) hin eine elektrische Steckverbindung (6) herstellbar ist, dadurch gekennzeichnet, daß die beiden Halteelemente (2) an die Innenseite des Abdeckelementes (1) einstückig angeformt sind und daß die elektrische Steckverbindung (6) unmittelbar zwischen den beiden Kontaktelementen (5), welche an dem Gehäuse (12) befestigbar sind, und den beiden Sockeln (4) der Soffittenlampe (3) herstellbar ist und daß die elektrischen Kontaktelemente (5) und die Sockel (4) der Soffittenlampe (3) zur lösbaren Halterung des Abdeckelementes (1) mit der zwischen seinen Halteelementen (2) einsetzbaren Soffittenlampe (3) dienen.

2. Fahrzeugleuchte nach Anspruch 1, dadurch gekennzeichnet, daß die beiden Kontaktelemente (5) aus Federblech hergestellt sind und zwei gabelförmige Abschnitte (7) mit federnden Schenkeln (8) aufweisen, zwischen welchen die Soffittenlampe (3) mit ihren beiden Sockeln (4) einsteckbar ist.

3. Fahrzeugleuchte nach Anspruch 2, dadurch gekennzeichnet, daß die Kontaktelemente (5) durch Biegen um eine Linie (11) gedoppelt sind, wobei sich benachbarte Endabschnitte der Doppelung auseinandergebogen sind und die Schenkel (8) des gabelförmigen Abschnittes (7) sind.

4. Fahrzeugleuchte mit einem Gehäuse (12), welches zur Aufnahme der Soffittenlampe (3) und der Kontaktelemente (5) dient und welches durch das Abdeckelement (1) abschließbar ist, nach einem der Ansprüche 1 bis 3, dadurch gekennzeichnet, daß das Gehäuse (12) mit Befestigungsmitteln (13) versehen ist, durch welche die Kontaktelemente (5) an dem Gehäuse (12) festsetzbar sind.

5. Fahrzeugleuchte nach Anspruch 4, dadurch gekennzeichnet, daß die Befestigungsmittel (13) von in den Boden des Gehäuses (12) eingebrachten Schlitzen gebildet sind, in welchen die Kontaktelemente (5) mit einem vom gabelförmigen Abschnitt (7) wegweisenden Endabschnitt (14) festsitzend einschiebbar sind bis ein seitlicher Vorsprung (15) des Kontaktelements (5) an die Innenseite des Gehäuses (12) anschlägt.

6. Fahrzeugleuchte nach Anspruch 4 oder 5, dadurch gekennzeichnet, daß das Gehäuse (12) an sich gegenüberliegenden Seitenwänden (16) ein in das Innere des Gehäuses (12) vorspringendes Abstützelement (17) für die Halteelemente (2) aufweist.

7. Fahrzeugleuchte nach einem der Ansprüche 1 bis 6, dadurch gekennzeichnet, daß das Abdeckelement (1) auf seiner Innenseite an seinem äußeren Randbereich umlaufend eine Ringnut (18) zur Aufnahme einer Dichtung (19) aufweist.

8. Fahrzeugleuchte mit Befestigungselementen (20) zum Festsetzen des Abdeckelementes (1) an dem Fahrzeug nach einem der Ansprüche 1 bis 7, dadurch gekennzeichnet, daß die Soffittenlampe (3) mit Spiel an den Halteelementen (2) und spielfrei an den Kontaktelementen (5) halterbar ist.

9. Fahrzeugleuchte, bei welcher die Soffittenlampe (3) mit ihren sich abgewandten kegelförmigen Sockelabschnitten (10) in eine Öffnung (9) der Halteelemente (2) eingesetzt ist, nach Anspruch 8, dadurch gekennzeichnet, daß die Öffnung (9) in den Halteelementen (2) ein in Aufsetzrichtung des Abdeckelementes (1) verlaufendes Langloch ist.

10. Fahrzeugleuchte nach einem der Ansprüche 1 bis 7, dadurch gekennzeichnet, daß durch die Halteelemente (2), die Soffittenlampe (3) und durch die Kontaktelemente (5) sowohl die Soffittenlampe (3) als auch mittelbar das Abdeckelement (1) spielfrei halterbar ist.

## Claims

1. Vehicle light, especially a number plate light, having a cover element (1) by means of which an opening in a housing (12) can be closed and which has a light transmitting light window, and having two holder elements (2) which are arranged on the inner surface of the cover element (1) and by which a festoon bulb (3) can be retained by its two caps (4), and having two electrical contact elements (5) by which an electrical plug-in connection (6) to the festoon bulb (3) can be established, characterised in that the two holder elements (2) are formed integrally onto the inner surface of the cover element (1), and in that the electrical plug-in connection (6) can be established directly between the two contact elements (5) and the two caps (4) of the festoon bulb (3), the two contact elements (5) being securable to the housing (1), and in that the electrical contact elements (5) and the caps (4) of the festoon bulb (3) serve to provide releasable retention of the cover element (1) together with the festoon bulb (3) insertable between its holder elements (2).

2. Vehicle light according to claim 1, characterised in that the two contact elements (5) are made of spring sheet metal and have two bifurcated sections (7) with resilient limbs (8) between which the festoon bulb (3) can be plugged in by its two caps (4).

3. Vehicle light according to claim 2, characterised in that the contact elements (5) are doubled by folding about a line (11), adjoining end sections of the doubling being bent apart and constituting the limbs (8) of the bifurcated section (7).

4. Vehicle light having a housing (12) which serves to receive the festoon bulb (3) and the contact elements (5) and which can be closed by the cover element (1), according to one of claims 1 to 3, characterised in that the housing (12) is provided with securing means (13) by means of which the contact elements (5) can be fixed to the housing (12).

5. Vehicle light according to claim 4, characterised in that the securing means (13) are formed by slots provided in the base of the housing (12) into which the contact elements (5), by way of their end section (14) remote from the bifurcated section (7), can be pushed so as to be fixed, namely pushed in until a lateral projection (15) of the contact element (5) abuts the inner surface of the housing (12).

6. Vehicle light according to claim 4 or 5, characterised in that the housing (12), at side walls (16) disposed opposite each other, has a support element (17) for the holder elements (2) which support element (17) projects into the interior of the housing (12).

7. Vehicle light according to one of claims 1 to 6, characterised in that the cover element (1), at the outer edge region of its inner surface, has a surrounding annular groove (18) to receive a seal (19).

8. Vehicle light having securing elements (20) for fixing the cover element (1) to the vehicle, according to one of claims 1 to 7, characterised in that the festoon bulb (3) is retainable with play by the holder elements (2) and without play by the contact elements (5).

9. Vehicle light in which the festoon bulb (3) is inserted in an opening (9) of the holder elements (2) by its conical cap sections (10) that are remote from each other, according to claim 8, characterised in that the opening (9) in the holder elements (2) is an elongated hole extending in the direction in which the cover element (1) is applied.

10. Vehicle light according to one of claims 1 to 7, characterised in that the festoon bulb (3) is retainable free from play by the holder elements (2), and the festoon bulb (3) and indirectly the cover element (1) are also both retainable free from play by the contact elements (5).

## Revendications

1. Lampe de véhicule, notamment lampe de plaque minéralogique, comportant un élément de recouvrement (1), au moyen duquel une ouverture d'un boîtier (12) doit être fermée et qui possède une fenêtre transparente pour la lumière, et comportant deux éléments de retenue (2) montés sur le côté intérieur de l'élément de recouvrement (1) et sur lesquels peut être retenue une lampe navette (3) avec ses deux douilles (4), et deux éléments de contact électriques (5), à l'aide desquels une liaison électrique par enfichage (6) peut être établie avec la lampe navette (3), caractérisée en ce que les deux éléments de retenue (2) sont formés d'un seul tenant sur le côté intérieur de l'élément de recouvrement (1) et que la liaison électrique à enfichage (6) peut être établie directement entre les deux éléments de contact (5), qui peuvent être fixés au boîtier (12), et les deux douilles (4) de la lampe navette (3), et que les éléments de contact électriques (5) et les douilles (4) de la lampe navette (3) servent à retenir de façon amovible l'élément de recouvrement (1) à la lampe navette (3) pouvant être insérée entre les deux éléments de retenue (2).

2. Lampe de véhicule selon la revendication 1, caractérisée en ce que les deux éléments de contact (5) sont réalisés en une tôle pour ressorts et comportent deux parties en forme de fourche (7) comportant des branches élastiques (8), entre lesquelles la lampe navette (3) peut être insérée avec ces deux douilles (4).

3. Lampe de véhicule selon la revendication 2, caractérisée en ce que les éléments de contact (5) sont doublés par repliage autour d'une ligne (11), des parties voisines d'extrémité de la structure double étant écartées l'une de l'autre par coudage et formant les branches (8) de la partie en forme de fourche (7).

4. Lampe de véhicule comportant un boitier (12), qui est utilisé pour loger la lampe navette (3) et les éléments de contact (5) et qui peut être fermé par l'élément de recouvrement (1), selon l'une des revendications 1 à 3, caractérisée en ce que le boîtier (12) comporte des moyens de fixation (13), a l'aide desquels les éléments de contact (5) peuvent être fixés sur le boîtier (12).

5. Lampe de véhicule selon la revendication 4, caractérisée en ce que les moyens de fixation (13) sont formés par des fentes qui sont aménagées dans le fond du boîtier (12) et dans lesquelles les éléments de contact (5) peuvent être insérés en étant en appui de façon fixe, par une section d'extrémité (14) qui s'étend à partir de la partie en forme de fourche (7) jusqu'à ce qu'une partie saillante latérale (15) de l'élément de contact (5) vienne en butée contre la face intérieure du boîtier (12).

6. Lampe de véhicule selon la revendication 4 ou 5, caractérisée en ce que le boîtier (12) comporte, sur des parois latérales réciproquement opposées (16), un élément d'appui (17) qui fait saillie à l'intérieur du boîtier (12) et est prévu pour les éléments de retenue (2).

7. Lampe de véhicule selon l'une des revendications 1 à 6, caractérisée en ce que l'élément de recouvrement (1) comporte, sur sa face intérieure et selon une disposition circonférentielle au niveau de sa partie de bord extérieure, une gorge annulaire (18) servant à loger une garniture d'étanchéité (19).

8. Lampe de véhicule comportant des éléments de fixation (20) pour fixer l'élément de recouvrement (1) sur le véhicule selon l'une des revendications 1 à 7, caractérisée en ce que la lampe navette (3) peut être retenue avec jeu sur les éléments de retenue (2) et sans jeu sur les éléments de contact (5).

9. Lampe de véhicule, dans laquelle la lampe navette (3) est insérée, avec les parties coniques, situées à l'opposé l'une de l'autre, de ses douilles (10) dans une ouverture (9) des éléments de retenue (2), selon la revendication 8, caractérisée en ce que l'ouverture (9) formée dans les éléments de retenue (2) est un trou allongé qui s'étend dans la direction d'application de l'élément de recouvrement (1).

10. Lampe de véhicule selon l'une des revendications 1 à 7, caractérisée en ce que la lampe navette (3) peut être retenue sans jeu par les éléments de retenue (2) et qu'aussi bien la lampe navette (3) que également, indirectement, l'élément de recouvrement (1) peuvent être retenus sans jeu par les éléments de contact (5).
